# EUROPEAN PATENT SPECIFICATION

(11) **EP 1 024 119 B1**
(45) Date of publication and mention of the grant of the patent: **05.07.2006**
(21) Application number: 99500230.0
(22) Date of filing: 02.12.1999
(51) Int. Cl.: C03C 25/10, C03C 25/40, D06M 15/643

(54) **Use of a silicone emulsion for improving the thermal stability of a textile element made of fibres**
Verwendung einer Silikonemulsion zur Verbesserung der thermischen Stabilität eines aus Fasern hergestellten Textilelementes
Utilisation d'une émulsion silicone pour améliorer la stabilité thermique d'un élément en textile fabriqué de fibres

(30) Priority: 15.12.1998 ES 9802597
(43) Date of publication of application: 02.08.2000
(73) Proprietor: RELATS, S.A., 08140 Caldes de Montbui (ES)
(72) Inventor: Relats Manen, Jordi, 08140 Caldes de Montbui (ES); Relats Casas, Pere, 08140 Caldes de Montbui (ES)
(74) Representative: Ponti Sales, Adelaida

(56) References cited:
- EP-A- 0 285 391
- EP-A- 0 474 207
- GB-A- 719 466
- GB-A- 855 030
- GB-A- 2 068 989
- DATABASE WPI Week 198539 Derwent Publications Ltd., London, GB; AN 1985-239645 XP002170814 & JP 60 155762 A ((JAPC)NIPPON SHOKUBAI KAGAKU KOGYO CP LTD), 15 August 1985 (1985-08-15)

## Description

This invention relates to the use of a silicone emulsion for improving the thermal stability of a textile element made of fibres, which contain silicon.

### BACKGROUND OF THE INVENTION

Manufacturers of glass fibre and quartz fibre threads, when spinning same, apply a mixture of organic materials, usually called binding agents, to the surface of the thread in order to lubricate the surface and protect the thread from wear by abrasion during the textile process.

GB 2068989 describes a silicone emulsion which provides an elastomeric product upon removal of water under ambient conditions comprising: (a) 100 parts by weight of an anionically stabilized, hydroxyl endblocked polydiorganosiloxane, present as an oil-in-water emulsion; (b) from 1 to 150 parts by weight of amorphous silica; (c) from 0 to 200 parts by weight of filler other than amorphous silica and (d) from 0.1 to 1.5 parts by weight of alkyl tin salt and has a pH of 9 or greater and a solids content less than 40 percent by weight. Said silicone emulsion is suitable for coating fabrics, films and papers, rendering, said substrate, water-repellent.

GB 855030 describes a composition useful for treating glass fibres and glass cloth, said composition comprising by weight: (a) from 50 to 60 per cent of a liquid methylpolysiloxane containing an average of from 1.95 to 2.1 methyl radicals per silicon atom and having a viscosity from 10 to 1000 centistokes when measured at 25°C; (b) from 1 to 10 per cent of a methylpolysiloxane having an average of more than two methyl radicals per silicon atom and having a viscosity of from 50,000 to 2,000,000 centistokes when measured at 25°C; (c) from 0 to 10 per cent of a liquid methylpolysiloxane resin having a ratio from 1.2 to 1.7 methyl radicals per silicon atom and containing CH₃SiO₃/₂, (CH₃) ₂SiO and (CH₃)₃SiO₁/₂ units; (d) from 1 to 15 per cent of a finely divided silica; (e) from 1 to 10 per cent of a dimerized linoleic acid, and the balance an inert solvent. Said composition is used for coating the fibre, preventing the alkali migration from the content leachable Na-Ca.

GB 719466 describes a method for treating glass fibre fabrics comprising the steps of moving the fabric in a flat plane through an oven, heat at a temperature between 400-1300°F for a time ranging from 70 hours at the lower temperature to a few seconds at the higher temperature, treating the heat treated fibres with a coating composition to deposit a protective layer on the glass fiber surface and then, setting the protective agent on the glass fiber surfaces with a second heat treatment. Said coating composition is one thermosetting resinous material. With the method described in this document, the resulting fiber has some of the qualities of the finest silks, satins and woollens.

EP 0474204 describes a fiber treatment agent composition consisting essentially of (a) 100 weight parts organopolysiloxane which has a viscosity of at least 10 centistokes at 25°C; (b) 0.1 to 30 weight parts organosilane; (c) colloidal silica; (d) 0.1 to 20 weight parts condensation-reaction catalyst; (e) 1 to 30 weight parts surfactant and (f) an arbitrary quantity of water. Said fiber treatment agent composition makes animal fibers shrinkage arising from water-based laundering.

EP 0285391 describes an organopolysiloxane emulsion and a method for its preparation. Said emulsion comprises (a) an organopolysiloxane having the general formula HO(R2SIO)mH; (b) an aminoxy group containing organosiliconcompound; (c) a surfactant and (d) water. Said method provides a nonionic organopolysiloxane emulsion whose stability is not impaired even when an anionic or cationic additive is added to the emulsion.

XP-002170814 describes a composition containing (a) an aqueous copolymer dispersion and (b) an aqueous colloidal silica in a ratio of 100:0.5 to 200 by wt. This binder composition has strong adhesion to glass fiber and good resistance to water, acid and dicolouration.

However, the maximum possible improvement in resistance to high temperatures is achieved by removing 99% of the binding agent by applying appropriate heat-cleansing techniques. The temperature and duration of the heating will depend on the shape of the textile element and the available equipment, but as a guideline it may be indicated that the textile element will be subjected to a temperature of 400°C for at least 60 seconds.

Depending on the nature of the glass fibre thread, the application of a temperature of over 500°C for periods exceeding 30 seconds can harm the mechanical properties of the textile element.

Textile elements treated with an organic material or with inorganic materials, however, do not improve in thermal stability.

### DESCRIPTION OF THE INVENTION

The textile element made of fibres containing silicon manages to solve the aforesaid disadvantages, while provide other advantages that are described below.

The textile element made of fibres containing silicon, which is coated with a material, is characterised in that said material is an emulsion of silicone.

Thanks to this characteristic, a textile element of considerable wear resistance is achieved, this resistance being much greater than that of the textile elements treated with an organic material known to date.

Preferably, said fibres include between 40% and 99.9% silicon dioxide.

The silicone emulsion used for coating the textile element of the invention is preferably the silicone emulsion marketed under the name of Dow Corning Fabric Coating 61. This emulsion consists in an anionically stabilised hyroxylated polydiorganosiloxane that contains two hydroxyl groups linked with silicon by molecule and colloidal silica. The emulsion has a pH ranging between 9 and 11.5, while the molecular weight of the polydiorganosiloxane lies between 200,000 and 700,000.

A procedure for improving the thermal stability, by increasing considerably the melting point of a textile element made of fibres which contain silicon, includes the steps of:
- impregnation of said textile element with a silicone emulsion; and
- curing of the impregnated textile element at a predetermined temperature and for a predetermined time.

Preferably, said procedure also includes a phase of cleaning of the impregnated textile element which is carried out prior to impregnation thereof, this cleaning being implemented at a predetermined temperature and for a predetermined period of time.

According to a preferred embodiment, the emulsion has between 10% and 60% of solid material, while the viscosity is within the range of 10 000 de 30 000 mPas (10,000 to 30,000 cps). Preferably, the curing of the textile element is carried out at a temperature between 350°C and 900°C for a period of time between 10 seconds and 10 minutes.

### DESCRIPTION OF A PREFERRED EMBODIMENT AND OF THE TESTS CARRIED OUT

For a better understanding of all that has been set out by way of non-restrictive example, a practical case of embodiment is described.

The results obtained on the basis of the tests carried out show that better tensile strength and abrasion resistance are achieved with the textile element treated with the procedure of the invention than in the case with identical textile elements without silicone emulsion coating and not so treated.

The silicone emulsion that coats the textile element is the silicone emulsion marketed under the name of Dow Corning Fabric Coating 61. This emulsion consists in an anionically stabilised hyroxylated polydiorganosiloxane that contains two hydroxyl groups linked with silicon by molecule and colloidal silica. The emulsion has a pH ranging between 9 and 11.5, while the molecular weight of the polydiorganosiloxane lies between 200,000 and 700,000.

These tests were carried out on two textile elements with quartz fibres and glass fibres.

| a) Quartz tube | Tensile strength (kg.) | | | |
|---|---|---|---|---|
| Tube braidwoven on 36-needle head with two quartz threads of 136 tex per needle. | When manufactured | | After 16 hours at 1000°C | |
| Untreated | 57 | | 10 | |
| Treated | 125 | | 56 | |

| b) Quartz tube | Abrasion resistance (cycles) | | | |
|---|---|---|---|---|
| Tube braidwoven on 36-neddle head with two quartz threads of 136 tex per needle. | When manufactured | | After 16 hours at 1000°C | |
| Untreated | 4000 | | 56 | |
| Treated | 80000 | | 58 | |

| c) Glass tube | Tensile strength (kg.) | | | |
|---|---|---|---|---|
| Tube braidwoven on 18-needle head with glass thread of 68x3 tex per needle. | When manufactured | After 400 hours at 400°C | | After 90 hours at 600°C |
| Untreated | 49 | 11 | | 4.5 |
| Treated | 49 | 41 | | 22 |

| d) Glass tube | Abrasion resistance (cycles) | | | |
|---|---|---|---|---|
| Tube braidwoven on 18-needle head with glass thread of 68x3 tex per needle. | When manufactured | After 400 hours at 400°C | | After 90 hours at 600°C |
| Untreated | 350 | 180 10 | | |
| Treated | 25000 | 180 35 | | |

## Claims

1. Use of a silicone emulsion consisting of an anionically stabilised hyroxylated polydiorganosiloxane that contains two hydroxyl groups linked with silicon by molecule and colloidal silica, said silicone emulsion having a pH ranging between 9 and 11.5 and a molecular weight of polydiorganosiloxane lying between 200,000 and 700,000, to improve the thermal stability of a textile element made of fibers which contain silicon by increasing its melting point.

2. The use as claimed in Claim 1, **characterised in that** said fibres include between 40% and 99.9% of silicon dioxide.

3. The use as claimed in any of the previous claims, **characterised in that** said silicone emulsion has between 10% and 60% of solid material.

4. The use as claimed in any of the previous claims, in which the viscosity of said silicone emulsion is within the range of 10,000 to 30,000 mPa·s (cps).

## Patentansprüche

1. Verwendung einer Silikonemulsion, bestehend aus einem anorganisch stabilisierten, hydroxylierten Polydiorganosiloxan, das zwei mit Silizium verbundene Hydroxylgruppen pro Molekül enthält, und kolloidalem Siliziumoxid, wobei die Silikonemulsion einen pH-Wert im Bereich von zwischen 9 und 11,5 und ein Molekulargewicht des Polydiorganosiloxans, das zwischen 200000 und 700000 liegt, besitzt, um die thermische Stabilität eines Textilstücks, das aus Fasern hergestellt ist, die Silizium enthalten, durch Erhöhen seines Schmelzpunktes zu verbessern.

2. Verwendung gemäß Anspruch 1, **dadurch gekennzeichnet, dass** die Fasern zwischen 40 % und 99,9% Siliziumdioxid einschließen.

3. Verwendung gemäß einem der vorhergehenden Ansprüche, **dadurch gekennzeichnet, dass** die Silikonemulsion zwischen 10 % und 60 % festes Material besitzt.

4. Verwendung gemäß einem der vorhergehenden Ansprüche, wobei die Viskosität der Silikonemulsion im Bereich von 10000 bis 30000 mPa·s (cps) liegt.

## Revendications

1. Utilisation d'une émulsion de silicone consistant en un polydiorganosiloxane hydroxylé stabilisé de manière anionique qui contient, par molécule, deux groupes hydroxy liés par un atome de silicium, et de la silice colloïdale, ladite émulsion de silicone ayant un pH de 9 à 11,5 et un poids moléculaire de polydiorganosiloxane de 200000 à 700000, pour améliorer la stabilité thermique d'un élément textile fait de fibres contenant du silicium, par accroissement de son point de fusion.

2. L'utilisation telle que revendiquée dans la revendication 1, **caractérisée en ce que** lesdites fibres comprennent de 40 % à 99,9 % de dioxyde de silicium.

3. L'utilisation telle que revendiquée dans l'une quelconque des revendications précédentes, **caractérisée en ce que** ladite émulsion de silicone contient de 10 % à 60 % d'une matière solide.

4. L'utilisation telle que revendiquée dans l'une quelconque des revendications précédentes, dans laquelle la viscosité de ladite émulsion de silicone est dans la plage de 10000 à 30000 mPa.s (cP).
